# EUROPÄISCHE PATENTSCHRIFT

(11) **EP 0 852 895 B1**
(45) Veröffentlichungstag und Bekanntmachung des Hinweises auf die Patenterteilung: **28.04.1999**
(21) Anmeldenummer: 96920725.7
(22) Anmeldetag: 28.06.1996
(51) Int. Cl.: H05B 41/38, H02M 3/335

(54) **GETAKTETE STROMVERSORGUNGSSCHALTUNG MIT EINER VON EINEM VERBRAUCHER UNABHÄNGIGEN, ZUMINDEST ZEITWEISE WIRKSAMEN LAST**
FIXED-CYCLE POWER-SUPPLY CIRCUIT WITH AN AT LEAST TEMPORARILY ACTIVE CONSUMER-INDEPENDENT LOAD
CIRCUIT D'ALIMENTATION CADENCE A CHARGE AU MOINS TEMPORAIREMENT ACTIVE, INDEPENDANTE D'UN CONSOMMATEUR

(30) Priorität: 28.09.1995 DE 19536064
(43) Veröffentlichungstag der Anmeldung: 15.07.1998
(73) Patentinhaber: ROBERT BOSCH GMBH, 70442 Stuttgart (DE)
(72) Erfinder: BORHO, Lothar, D-77731 Willstätt (DE); PREIS, Karl-Heinrich, D-77830 Bühlertal (DE); ECKERT, Klaus, D-77770 Durbach (DE); KERN, Robert, D-77887 Sasbachwalden (DE); DECKER, Gerhard, D-77855 Achern (DE)
(86) Internationale Anmeldenummer: DE9601153
(87) Internationale Veröffentlichungsnummer: WO9712500

(56) Entgegenhaltungen:
- EP-A- 0 124 735
- EP-A- 0 165 087
- EP-A- 0 194 414
- EP-A- 0 262 739

## Beschreibung

### Stand der Technik

Die Erfindung geht aus von einer getakteten Stromversorgungsschaltung mit einer von einem Verbraucher unabhängigen, zumindest zeitweise wirksamen Last, insbesondere für die Energieversorgung von Gasentladungslampen als Verbraucher, der im Oberbegriff des Anspruchs 1 definierten Gattung.

**EP-A-0262739** beschreibt einen getakteten Gleichspannungswandler, der einen Ausgang aufweist, dessen Spannung geregelt wird, und erzeugt eine ungeregelte Spannung, die durch Kopplung an eines seiner induktiven Speicherelemente gewonnen wird. Um bei einem solchen Gleichspannungswandler den lückenden Betrieb zu vermeiden, ist ein Schwellenwertdetektor vorgesehen, der dann über einen Schalter eine Grundlast an den geregelten Ausgang anlegt, wenn die ungeregelte Spannung eine vorgegebene Schwelle unterschreitet.

In der DE 42 31 968.4 A1 ist eine getaktete Stromversorgungsschaltung beschrieben, bei welcher ausgangsseitig eine vom elektrischen Verbraucher, vorzugsweise eine Gasentladungslampe, unabhängige zumindest zeitweise wirksame Last vorgesehen ist. Die Anordnung enthält einen Gleichspannungs-Gleichspannungs-Wandler, der über Schaltmitttel mit einer Gleichspannungsquelle verbunden wird. Die Schaltsignale für die Schaltmittel werden von einer Steueranordnung in Abhängigkeit vom ausgangsseitig vorhandenen Lastzustand bereitgestellt. Bei dieser bekannten Stromversorgungsschaltung steht ausgangsseitig nur eine Spannung zur Verfügung. Ist der Verbraucher eine Gasentladungslampe, dann ist zu deren Zündung eine gegenüber der Betriebsspannung wesentlich höhere Zündspannung erforderlich. Diese wird bei der bekannten Stromversorgungsschaltung beispielsweise durch Einkopplung eines entsprechenden Zündimpulses mittels eines besonders vorzusehenden Übertragers aufgebracht. Gemäß der bekannten Stromversorgungsschaltung gibt die Zündschaltung nach Erreichen der vorgegebenen Spannung am Glättungskondensator einen Zündimpuls ab. Dies bedeutet, daß die Ausgangsspannung bis auf diesen erhöhten Wert gebracht werden muß. Bei dieser bekannten Stromversorgungsschaltung ist der abschaltbaren Last ein Glättungskondensator nachgeschaltet. Dessen gespeicherte Energie reicht nicht aus, um die nach dem Einleiten des Zündvorganges in kurzer Zeit benötigte Energie zum sicheren Beenden des Zündvorganges zur Verfügung zu stellen. Durch die Belastung mit der zumindest zeitweise wirksamen Wandlerlast wird dieser strommäßig belastet und die induktiv in der Sekundärwicklung gespeicherte Energie wird nach dem Zündfall zur Abdeckung des erhöhten Leistungsbedarfs der Lampe bereitgestellt. Die zumindest zeitweise wirksame Wandlerlast ist bei dieser bekannten Anordnung für den Zeitraum nach der Zündung bis zu ihrer Vollendung aufgabengemäß wirksam.

Bei vorliegender Erfindung ist dies nicht der Fall. Vielmehr ist hier nicht der Zündfall, sondern der Zeitraum bis dahin von ganz entscheidender Bedeutung hinsichtlich der Wirkungsweise der zeitweise wirksamen Wandlerlast.

### Vorteile der Erfindung

Die erfindungsgemäße getaktete Stromversorgungsschaltung mit einer von einem Verbraucher unabhängigen, zumindest zeitweise wirksamen Last, insbesondere für die Energieversorgung von Gasentladungslampen als Verbraucher, mit den kennzeichnenden Merkmalen des Anspruchs 1 hat demgegenüber den Vorteil der Bereitstellung zweier Spannungen, von denen in jedem Fall eine geregelt ist, der Spannungsunterschied dieser beiden Spannungen für die Bereitstellung der Zünderversorgungsspannung ausreichend ist und die dabei erforderliche schnelle zur Verfügungstellung der Nennspannung gewährleistet ist. Dies erfolgt in einer kostengünstigen Realisierung.

Gemäß der Erfindung wird dies prinzipiell dadurch erreicht, daß der Übertrager des Gleichspannungs-Gleichspannungs-Wandlers so aufgebaut ist, daß zwei Spannungen unterschiedlicher Polarität und Größe ausgangsseitig abnehmbar sind, zumindest eine dieser Spannungen geregelt und für die Versorgung während des Betriebs des Verbrauchers vorgesehen ist, und die zumindest zeitweise wirksame Last an die geregelte Spannung schaltbar ist.

Bei der bevorzugten Verwendung der erfindungsgemäß gestalteten Stromversorgungsschaltung für die Energieversorgung von Gasentladungslampen und deren Zündvorrichtung ist folgendes wesentlich. Aufgrund des internen Schaltungsaufbaus der Zündvorrichtung benötigt diese zur Sicherstellung einer ordentlichen Funktionalität eine eng tolerierte Versorgungsspannung von z.B. 460. Nach dem Anliegen dieser Versorgungsspannung an der Zündvorrichtung wird innerhalb kurzer Zeit die Zündspannung aufgebaut. Bedingt durch die geringe Belastung, welche die Zündvorrichtung bis zur Zündung der Lampe darstellt, es ist ein dem Leerlauf ähnliches Verhältnis, ist der Wandler nur sehr gering belastet. Es vergeht eine gewisse Zeit, bis die Versorgungsspannung den Nennwert von z.B. den genannten 460 V erreicht. Ohne die erfindungsgemäß verwendete zumindest zeitweise wirksame Last am Wandler, kann diese Zeit unzulässig lange sein, z.B. bei 20 ms liegen. Um diese Zeit wird eigentliche Zündvorgang verlängert. Durch die Belastung des Wandlers mit der zumindest zeitweise wirksamen Last von Anfang an, wird dieser zu erhöhtem Takten gezwungen und die Versorgungsspannung schneller aufgebaut. Durch diese erfindungsgemäße Maßnahme wird diese Aufbauzeit erheblich verkürzt. Bei einem Ausführungsbeispiel kann sie auf einen Wert von kleiner 5 ms verkürzt werden.

Durch die in den weiteren Ansprüchen niedergelegten Maßnahmen sind vorteilhafte Weiterbildungen und Verbesserungen der im Anspruch 1 angegebenen Stromversorgungsschaltung möglich.

Gemäß einer besonders vorteilhaften Weiterbildung der Erfindung wird die zweite Spannung ebenfalls geregelt, wozu diese mit einer Belastung beaufschlagt wird, an welcher der aktuelle Wert abnehmbar ist. Dieser Wert ist auf eine Regelungsschaltung geführt, welche in Abhängigkeit vom festgestellten Wert der zweiten Spannung die zeitweise wirksame Last zu- oder abschaltet. Die Belastung ist in zweckmäßiger Ausgestaltung ein Spannungsteiler, dessen Teileranschluß auf die Regelungsschaltung geführt ist. Die Verwendung der an die erste geregelte Spannung anschaltbaren zumindest zeitweise wirksamen Last zur Regelung der anderen, zweiten Spannung, stellt eine besonders günstige und Kosten sparende Lösung dar.

Gemäß einer alternativen Ausgestaltung dieser vorteilhaften Weiterbildung, durch welche die Möglichkeit einer Abwärtsregelung der zweiten Spannung geschaffen wird, ist vorgesehen, daß parallel zum Spannungsteiler die Reihenschaltung eines Widerstandes mit einem Transistor angeordnet ist, der von der Regelschaltung dann leitend geschaltet wird, wenn der am Spannungsteiler abgegriffene aktuelle Wert der zweiten Spannung über dem Sollwert liegt. Damit kann diese Spannung vorteilhafterweise in beiden Richtungen geregelt werden.

In vorteilhafter Ausgestaltung dieser Weiterbildung der Erfindung ist der Spannungsteiler derart bemessen, daß das Puls-zu-Pausen-Verhältnis der Zu- oder Abschaltung der zeitweise wirksamen Last nicht zu klein bleibt, daß es insbesondere eine Regelung in beiden Richtungen erlaubt.

Gemäß vorteilhafter Weiterbildung der Erfindung ist die zeitweise wirksame Last mit veränderlichem Widerstand zu- oder abschaltbar.

In vorteilhafter Ausgestaltung dieser Weiterbildung der Erfindung besteht die zeitweise wirksame Last aus der Reihenschaltung eines ohmschen Widerstandes und eines Transistors, welcher nach Art der Zweipunktregelung aus- und einschaltbar ist, oder welcher mit einem Puls-Weiten-Modulations-Signal entsprechend der Pulsweite mehr oder weniger lang einschaltbar ist.

Ein andere alternative vorteilhafte Ausgestaltung dieser Weiterbildung der Erfindung besteht darin, daß die zeitweise wirksame Last aus einem variablen Lastwiderstand, insbesondere dem Drain-Source-Widerstand eines FET-Transistors, besteht, wobei der Wert des Widerstandes von dem Betrag der Gate-Source-Spannung abhängig ist.

In weiterer vorteilhafter Ausgestaltung der Erfindung ist für die Regelung der geregelten Spannung bzw. Spannungen ein Mikrokontroller vorgesehen, welcher auf die Schaltmittel des Gleichspannungs-Gleichspannungs-Gleichspannungs-Wandlers einwirkt.

Gemäß einer besonders zweckmäßigen Ausgestaltung der Erfindung wird nach vollständigem Einschalten und Inbetriebgehen des Verbrauchers die eine der beiden Spannungen, vorzugsweise die ungeregelte oder die mit dem höheren Betragswert, abgeschaltet. Diese Ausführungsform ist insbesondere beim Einsatz zur Energieversorgung von Gasentladungslampe von Bedeutung. Dort wird zur Zündung die eine Spannung als Zusatzspannung benötigt, um als Teil der Versorgungsspannung für die Zündvorrichtung dieser eine ausreichende Spannung zur Verfügung zu stellen. Die andere, meist die im Betrag niedrigere geregelte Spannung wird dagegen als Betriebsspannung benutzt.

In vorteilhafter Weise wird die erfindungsgemäß gestaltete getaktete Stromversorgungsschaltung in einem Steuergerät zur Energieversorgung von Hochdruck-Gasentladungslampen verwendet, wobei diese insbesondere in Scheinwerfern von Kraftfahrzeugen angeordnet sind.

### Zeichnung

Die Erfindung ist anhand mehrerer in der Zeichnung dargestellter Ausführungsbeispiele in der nachfolgenden Beschreibung näher erläutert. Es zeigen:
- Fig. 1: schematisch das Prinzipschaltbild einer ersten Ausführungsform der Erfindung, bei welcher die zweite Spannung ungeregelt ist;
- Fig. 2: schematisch das Prinzipschaltbild einer zweiten Ausführungsform der Erfindung, bei welcher beide Spannungen geregelt sind;
- Fig. 3: schematisch eine zweckmäßige Weiterbildung der Ausführungsform von Fig. 2, welche eine Abwärtsregelung erlaubt, und
- Fig. 4: schematisch eine mögliche Realisierung der zumindest zeitweise abschaltbaren Last.

### Beschreibung der Ausführungsbeispiele

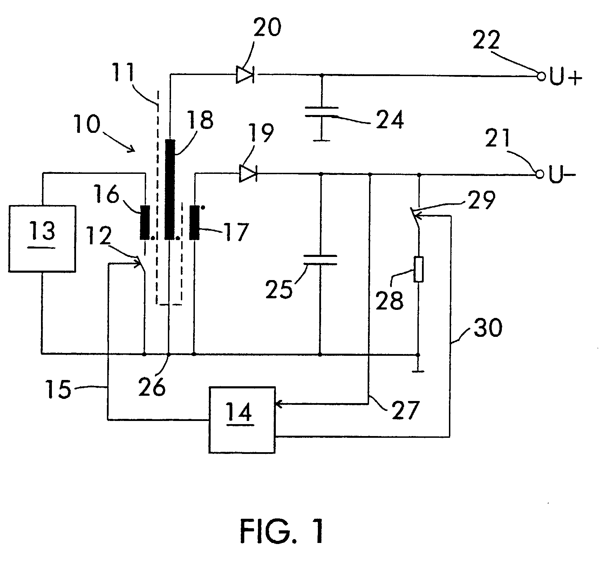

In Fig. 1 ist schematisch das Prinzipschaltbild einer ersten Ausführungsform der Erfindung dargestellt. Bei dieser Ausführungsform ist einer der beiden Spannungen, welche die getaktete Stromversorgungsschaltung liefert, ungeregelt. Ein Gleichspannungs-Gleichspannungs-Wandler 10 enthält einen Übertrager 11. Der Wandler 10 wird über Schaltmittel 12 mit einer Gleichspannungsquelle 13 verbunden. Eine Steueranordnung 14 liefert Schaltsignale 15 an die Schaltmittel 12 zur Taktung des Wandlers 10. Die Schaltmittel 12, beispielsweise ein Transistor, insbesondere ein FET-Transistor, legt die Spannung der Gleichspannungsquelle 13, beispielsweise die Batterie eines Kraftfahrzeuges, an eine Primärwicklung 16 des Übertragers 11.

Der Übertrager 11 des Wandlers 10 ist mit zwei Sekundärwicklungen 17 und 18 derart ausgestattet, daß über je eine Blockdiode 19 bzw. 20 an Ausgangsklemmen 21 bzw. 22 zwei Spannungen U- bzw. U+ mit unterschiedlicher Größe und Polarität anstehen. Dabei wird die beispielsweise entsprechend der größeren Sekundärwicklung 18 betragsmäßig größere Spannung U+ an einem Glättungskondensator 24 aufgebaut und von diesem an die Ausgangsklemme 22 abgegeben. Die Blockdiode 20 verhindert dabei ein Entladen des Kondensators 24 über die zugehörige Sekundärwicklung 18. In entsprechender Weise wird die entsprechend der kleineren Sekundärwicklung 17 betragsmäßig kleinere und entgegengesetzte Polarität aufweisende Spannung U- an einem Glättungskondensator 25 aufgebaut und von diesem an die Ausgangsklemme 21 abgegeben. Die Blockdiode 19 ist derart geschaltet, daß sie eine Entladung des Kondensators 25 über die zugehörige Sekundärwicklung 17 verhindert. Die jeweiligen Wicklungsanfänge der Wicklungen 16, 17, 18 des Übertragers 11 sind durch Punkte angegeben. Es ist daher klar, daß bei dieser Anordnung und dem Anschluß des Erdpotentials an den Verbindungspunkt 26 der beiden gegensinnigen Sekundärwicklungen 17 und 18 des Übertragers 11 die Spannung am Kondensator 24 positiv und die Spannung am Kondensator 25 negativ ist.

Die Spannungsregelung der negativen Spannung U- beruht darauf, daß primärseitig die Schaltmittel 12 von der Steueranordnung 14 entsprechend angesteuert werden. Zu dieser Regelung wird der Wert der negativen Spannung U- über eine Leitung 27 abgegriffen und der Steueranordnung 14 zugeführt. Diese stellt entsprechend dem Lastzustand am Ausgang 21 die Schaltsignale 15 für die Taktung des Wandlers 10 mittels der Schaltmittel 12 bereit. Bei geringer Last an der Ausgangsklemme 21 taktet der Wandler 10 wenig. Sinkt die Spannung U- unter einen vorgegebenen Schwellwert ab, gibt die Steueranordnung 14 mehr Schaltsignale 15 ab, so daß der Wandler 10 entsprechend mehr taktet.

Zwischen die Ausgangsklemme 21 der geregelten Spannung U- und den Erdpotentialanschluß 26 ist eine zumindest zeitweise wirksame Last vorgesehen. Diese Last besteht gemäß dem in Fig. 1 dargestellten Ausführungsbeispiel aus der Reihenschaltung eines ohmschen Widerstandes 28 und eines Schalters 29. Der Schalter kann bevorzugt durch einen Transistor realisiert werden, dem über eine Steuerleitung 30, die von der Steueranordnung 14 erzeugten Schaltsignale zum Zuschalten der Last durch Schließen des Schalters 29 oder zum Abschalten der Last durch Öffnen des Schalters 29 zugeführt werden.

Die zumindest zeitweise wirksame Last bewirkt im zugeschalteten Zustand, daß der Wandler 10 strommäßig belastet oder zusätzlich zur Stromlast an der Ausgangsklemme 21 belastet wird. Dies wiederum läßt die Spannung U- absinken, so daß bei Erreichen eines unteren Schwellwertes der Wandler 10 durch die Steueranordnung 14 zur Spannungserhöhung vermehrt getaktet wird. Durch die erhöhte Taktung des Wandlers 10 wird auch der Glättungskondensator 24 sehr viel schneller aufgeladen und somit steht damit die zweite, die positive Spannung U+ am Ausgang 22 wesentlich schneller mit ihrem gewünschten Wert zur Verfügung. Dieser Wert ist im wesentlichen durch das Übersetzungsverhältnis der Primärwicklung 16 und der zugehörigen Sekundärwicklung 18 bestimmt, sowie der zur Verfügung stehenden Spannung der Gleichspannungsquelle 13.

Entsprechend einer bevorzugten Verwendung der erfindungsgemäß gestalteten Stromversorgungsschaltung soll sie für den Betrieb einer Gasentladungslampe, insbesondere einer Hochdruck-Gasentladungslampe eingesetzt werden. Eine solche Lampe stellt einen schwierigen Verbraucher dar. Zunächst bedarf die Lampe einer hohen Zündspannung, damit der Lichtbogen zustande kommt. Dazu ist ein Zünder vorgesehen, welcher dabei für die Versorgungsschaltung belastungsmäßig praktisch den Leerlauffall darstellt und diese hohe Zündspannung aus der Zündversorgungsspannung generiert. Für die Aufbringung der hohen Versorgungsspannung für den Zünder von z.B. 460 V wird in sehr zweckmäßiger Weise die Addition der beiden Spannungen von U- und U+ verwendet. Weiterhin benötigt die Lampe eine bestimmte Betriebsspannung. Diese kann bis etwa 150 V betragen. Dazu wird z.B. die geregelte Spannung U- mit einem Nennwert von -150 V bereitgestellt. Wird der genannte Verbraucher, nämlich eine Gasentladungslampe, wie ebenfalls bevorzugt beabsichtigt, im Scheinwerfer eines Kraftfahrzeuges eingesetzt, dann versteht es sich von selbst, daß das Licht dieser Lampe sehr schnell zur Verfügung stehen muß. Daraus ergibt es sich zwingend, die notwendige Zündversorgungsspannung sehr schnell nach Einschalten der Versorgungsschaltung bereitzustellen. Durch die zu diesem Zeitpunkt von der Steueranordnung 14 eingeschaltete zumindest zeitweise wirksame Last, bestehend hier aus Widerstand 28 und geschlossenem Schalter 29, wird der Wandler 10 von Beginn an strommäßig belastet, auch wenn der Verbraucher selbst noch keine oder nur eine sehr geringe Last benötigt. Dies bedeutet ein schnelles Takten des Wandlers 10 und damit verbunden ein schnelles Aufladen sowohl des Glättungskondensators 24 für die zweite Spannung U+ am Ausgang 22 als auch der ersten, die Betriebsspannung bildende Spannung U- am Ausgang 21. Damit steht sehr schnell die nötige Zündversorgungsspannung, die aus diesen beiden Teilspannungen gebildet wird, zwischen den Ausgangsklemmen 21 und 22 zur Verfügung.

Nach der Zündung der Gasentladungslampe als Verbraucher, wird die zweite Spannung U+ als Teilspannung, die man auch als Hilfsspannung bezeichnen kann, nicht mehr benötigt. Der Betrieb wird ja nun mittels der geregelten ersten Spannung U- aufrecht erhalten. Deswegen wird zur Vermeidung unnötiger Belastung die zeitweise wirksame Last durch Öffnen des Schalters 29 abgeschaltet und der Widerstand 28 belastet den Wandler 10 nicht mehr.

Die in Fig. 1 dargestellte prinzipielle Ausführung der erfindungsgemäß gestalteten getakteten Stromversorgungsschaltung ermöglicht eine kostengünstige Realisierung, es sind nur wenige Bauelemente notwendig. Durch die Abschaltung der zeitweise wirksamen Wandlerlast, nämlich dann, wenn der Verbraucher im Betrieb ist, d.h. die Gasentladungslampe beispielsweise brennt, entstehen keine zusätzlichen Verluste. Die zur Zündung erforderliche Zündversorgungsspannung steht schnell zur Verfügung und es muß nur eine, die Betriebsspannung U-, geregelt werden.

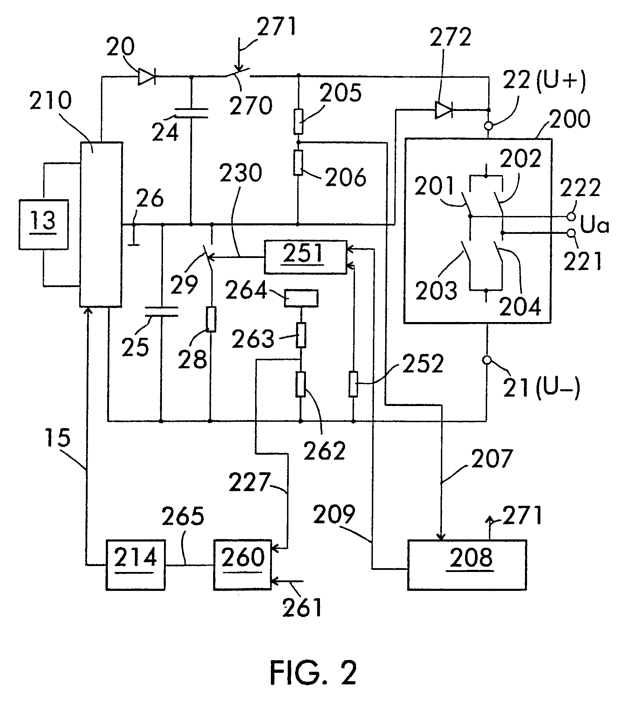

Bei der Verwendung der erfindungsgemäßen getakteten Stromversorgungsschaltung ist die Gasentladungslampe, insbesondere in Gestalt eine Hochdruck-Gasentladungslampe nicht unmittelbar an die Ausgangsklemmen 21 und 22 angeschlossen. Vielmehr ist dazwischen meist, wie im Ausführungsbeispiel gemäß Fig. 2 dargestellt, eine H-Brückenschaltung 200 eingefügt. Diese H-Brückenschaltung 200 enthält vorzugsweise FET-Transistoren als Schalter 201 - 204. Diese FET-Transistoren sind gegen Überspannungen empfindlich und deswegen davor zu bewahren. Bei der Anordnung gemäß Fig. 1 kann es gelegentlich vorkommen, daß zwischen dem Einschalten und dem effektiven Zünden der Lampe die zweite Spannung U+ allein derart groß wird, daß die zwischen den Ausgangsklemmen liegende Spannungsdifferenz die zulässige Überspannung überschreitet. Diese Spannungsdifferenz setzt sich aus den Werten der beiden Teilspannungen U- und U+ zusammen, es kann also auch von der Spannung U- ein zu hoher Beitrag kommen. Da diese jedoch geregelt ist, muß hier für eine Begrenzung der zweiten Spannung U+ gesorgt werden, damit keine Überspannung an der H-Brückenschaltung 200 auftritt.

Das in Fig. 2 dargestellte weitere Ausführungsbeispiel der Erfindung sieht zur Begrenzung der Spannung U+ ein Beaufschlagung mit einer Last, insbesondere in Gestalt eines Spannungsteilers mit den Widerständen 205 und 206 vor, der zwischen die Ausgangsklemme 22 und Erdpotential 26 gelegt ist und den zugehörigen Ausgang 22 belastet. Der Abgriff des Spannungsteilers erfolgt zwischen den beiden Widerständen 205 und 206 über eine Leitung 207, die als Eingang einem Mikrokontroller 208 zugeführt ist, der als Regelschaltung dient. Dieser erzeugt ein Ausgangssignal, insbesondere ein digitales Ausgangssignal, auf Leitung 209, welches einem Signalwandler 251 zugeführt wird. Dieser Signalwandler 251 erzeugt daraus auf Leitung 230 ein Ansteuersignal für den Schalter 29, der beim Schließen den Widerstand 28 als strommäßige Belastung der zeitweise wirksamen Last an den Gleichspannungs-Gleichspannungs-Wandler 210 anschließt. Beim Öffnen des Schalters 29 durch das entsprechende Signal auf Leitung 230 wird der Widerstand 28 vom Wandler 210 getrennt. Der Signalwandler 251 ist über einen Hilfswiderstand 252 mit der Spannung U- gekoppelt.

Es sei hier darauf hingewiesen, daß im Ausführungsbeispiel gemäß Fig. 2 für gleiche Bauteile wie beim Ausführungsbeispiel gemäß Fig. 1, dieselben Bezugszeichen verwendet werden. Desweiteren beschränkt sich die Erläuterung zu diesem Ausführungsbeispiel gemäß Fig. 2 dann auch darauf, die unterschiedlichen Maßnahmen, Bauteile, Funktionen und Wirkungsweisen zu erläutern.

Zur Regelung der Spannung U- ist gemäß dem Ausführungsbeispiel von Fig. 2 ein Komparator 260 vorgesehen, dem als Eingang auf Leitung 261 eine Vergleichsspannung als Schwellwert zugeführt ist. Auf Leitung 227 wird der an dem Verbindungspunkt eines Spannungsteilers abgenommene aktuelle Wert der Spannung U- dem Komparator 260 zugeführt. Der Spannungsteiler besteht aus den beiden Widerständen 262 und 263, die in Reihe zwischen der Spannung U- und einer Referenzspannungsquelle 264 geschaltet sind. Die Referenzspannung kann z. B. 5 Volt betragen. Das Ergebnis des Vergleichs des Komparators 260 zwischen der Vergleichsspannung 261 und dem aktuellen Wert von U- auf Leitung 227 wird über einen Ausgang 265 auf eine Steueranordnung 214 gegeben. Diese stellt die Taktsignale auf Leitung 15 für den Wandler 210 bereit.

Zwischen dem Glättungskondensator 24 und dem Ausgang 22 ist ein Schalter 270 vorgesehen, der von einem Signal auf einer Leitung 271 vom Mikrokontroller 208 geöffnet oder geschlossen wird. Mit diesem Schalter 270 wird die erfindungsgemäß nach diesem Ausführungsbeispiel geregelte zweite Spannung U+ dann vom Ausgang 22 getrennt, wenn sie dort nicht mehr benötigt wird. Dies ist bei der bevorzugten Anwendung beispielsweise dann der Fall, wenn die Gasentladungslampe gezündet hat und keine hohe Zündversorgungsspannung mehr vonnöten ist. An der Ausgangsklemme 22 steht dann das Erdpotential 26 an. Dabei ist aus Sicherheitsgründen eine Verpoldiode 272 mit ihrer Kathode an die Ausgangsklemme 22 und mit ihrer Anode auf Erdpotential 26 gelegt. Diese Anordnung ist deswegen so getroffen, weil an der anderen Ausgangsklemme 21 die negative Spannung U- anliegt, die dann die Betriebsspannung an die H-Brückenschaltung und von dort an den Verbraucher, bevorzugt eine Hochdruck-Gasentladungslampe, abgibt.

Im Ausführungsbeispiel gemäß Fig. 2 ist an den Ausgangsklemmen 21 und 22 die H-Brückenschaltung 200 angeschlossen dargestellt. Diese H-Brückenschaltung weist zwischen ihren beiden Schaltern 201 und 203 eine Verbraucheranschlußklemme 222 und zwischen ihren beiden Schaltern 202 und 204 eine Verbraucheranschlußklemme 221 auf. Zwischen diesen Verbraucheranschlußklemmen 221 und 222 steht die Ausgangsspannung Ua an, die z. B. einem nicht dargestellten Zündgerät mit der hohen Spannung, d.h. der Summe der beiden Teilspannungen U- und U+, bzw. der nicht dargestellten Gasentladungslampe mit der Betriebsspannung U- zugeführt wird.

Zusammenfassend wird nunmehr die Wirkungsweise des Ausführungsbeispiels gemäß Fig. 2 erläutert. Damit die Spannung U+ nicht zu groß wird, ist sie mit dem aus den Widerständen 205 und 206 gebildeten Spannungsteiler belastet. Falls durch die Belastung die Spannung nicht den geforderten Sollwert erreicht, schaltet der Mikrokontroller 208 über den Schalter 29 den Widerstand 28 der zeitweise wirksamen Wandlerlast zu. Dadurch sinkt die Spannung U- ab, so daß durch deren Regelung mittels des Komparators 260 die Taktung des Wandlers 210 intensiviert wird. Dadurch steigt nicht nur die Spannung U- wieder auf ihren Sollwert, sondern durch die vermehrte Energieübertragung auf die Sekundärseite des Wandlers 210 auch die Spannung U+. Wird der Sollwert von U+ überschritten, wird die zeitweise wirksame Wandlerlast durch Öffnen des Schalters 29 abgeschaltet. Der Wandler 210 taktet weniger und die Spannung U+ sinkt ab.

Die besonderen Vorteile der Ausführungsform gemäß Fig. 2 sind darin zusehen, daß die Regelung der zweiten Spannung U+ sehr leicht zu realisieren ist, wenig Zusatzaufwand und zusätzliche Bauteile erfordert. Die zumindest zeitweise wirksame Last, welche zur schnellen Erreichung der Teilspannungen vorgesehen ist, wird auch zur Regelung der zweiten Spannung U+ mit verwendet.

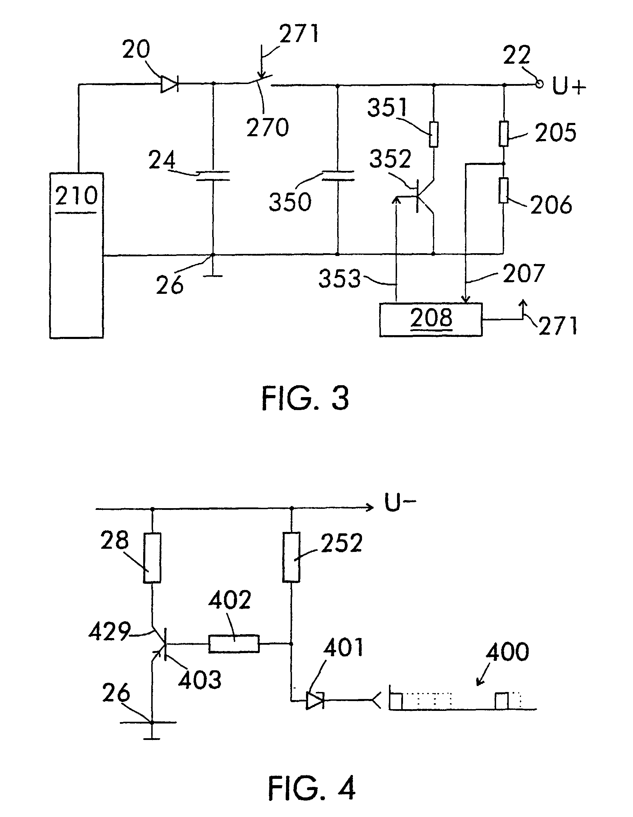

Die vorstehend beschriebene Regelung der Teilspannung U+ kann als Aufwärtsregelung bezeichnet werden, da zur Erreichung des Sollwertes jeweils die zeitweise wirksame Wandlerlast 28 zur Erhöhung der Taktung und damit zum Spannungsanstieg von U+ benutzt wird. In Fig. 3 ist in einem modifizierten Schaltungsausschnitt von Fig. 2 eine mögliche Ausführungsform für eine Abwärtsregelung dargestellt. Die vom Wandler 210 über die Blockdiode 20 getaktete Energie lädt den Glättungskondensator 24 auf. Dieser liegt vor dem Schalter 270. Hinter dem Schalter 270 ist ein weiterer Kondensator 350 angeordnet, der beim Schließen des Schalters 270 durch ein Signal auf Leitung 271, das vom Mikrokontroller 208 bereitgestellt wird, die Ladung und damit die Spannung vom Kondensator 24 mit übernimmt und als weiterer Puffer- oder Glättungskondensator wirkt. Bei der Abwärtsregelung wird davon ausgegangen, daß die Spannung vor und nach dem Einschalten des Schalters 270 dann auch nach diesem höher ist als der gewünschte Sollwert. Der tatsächliche Wert der Spannung U+ wird, wie bereits beschrieben am Spannungsteiler 205, 206 über die Leitung 207 abgegriffen. Parallel zu diesem Spannungsteiler ist die Reihenschaltung eines Widerstandes 351, der relativ niederohmig, z.B. zwischen etwa 10 und 100 kohm liegend, sein kann, und eines Transistors 352 angeordnet. Die Basis des Transistors 352 wird auf einer Leitung 353 vom Mikrokontroller 208 her angesteuert. Steuert der Transistor 352, gegebenenfalls in einem geeigneten Puls-zu-Pausen-Verhältnis, auf, dann wird U+ belastet und nach unten geregelt. Mit anderen Worten wird durch diese Anordnung der Abgriffspunkt des Spannungsteilers 205, 206 in seinem Wert abgesenkt, wenn die Ausgangsspannung an den Kondensatoren 24 und 350 für die Abwärtsregelung über dem Sollwert liegt.

In Fig. 4 ist ein Ausführungsbeispiel für die zumindest zeitweise wirksame Last, die an den Gleichspannungs-Gleichspannungs-Wandler 10 bzw. 210 anschließbar ist, dargestellt. Als zeitweise wirksame Last wird der Widerstand 28 von einem als Schalter 29 wirkenden Transistor 429 zwischen Erdpotential 26 und Spannung U- zu- bzw. abgeschaltet. Zur Steuerung wird ein digitales Signal 400, welches vom Mikrokontroller 208 kommt und impulsförmig dargestellt ist, über eine Zenerdiode 401 und einen Widerstand 402 auf die Basis 403 des Transistors 429 geführt. Ein günstiges Puls-zu-Pausen-Verhältnis liegt bei ca. ¼ "Ein" zu ¾ "Aus". Dies ist in der Darstellung des digitalen Signals 400 durch die Kombination von ausgezogenen und gepunkteten Impulsen gezeigt. Gemäß einem numerischen Beispiel kann dieses Verhältnis dann erreicht werden, wenn, wie im Ausführungsbeispiel gemäß Fig. 2, der Wert für den Widerstand 205 etwa 500 kohm und der Wert für den Widerstand 206 etwa 7,5 kOhm beträgt.

Bei der Realisierung der zeitweise wirksamen Last können, neben der vorstehend erläuterten, verschiedene Lösungen gewählt werden. So ist es beispielsweise möglich, den Transistor 429 in der Art der Zweipunktregelung jeweils voll durchzusteuern oder zu sperren. Damit ist der Widerstand 28 entweder ganz zu- oder ganz abgeschaltet. Es ist weiterhin möglich, den Transistor mit einem Puls-Weiten-Modulations-Signal entsprechend der gewählten Pulsweite mehr oder weniger lang einzuschalten. Dementsprechend mehr oder weniger lang wirkt der Widerstand 28 auf das Takten des Wandlers 10 bzw. 210 ein. Eine weitere Realisierungsmöglichkeit besteht darin, einen variablen Lastwiderstand als zumindest zeitweise wirksame Last zur Verfügung zu stellen. Dies kann mit Hilfe des Drain-Source-Widerstandes eines FET-Transistors erfolgen. Der Wert dieses Widerstandes hängt dabei von dem Betrag der Gate-Source-Spannung ab.

Die Erfindung ermöglicht es, mit einfachen Mitteln zwei Spannungen für die Versorgung eines Verbrauchers mit sehr unterschiedlichen Lastzuständen zur Verfügung zu stellen, die sehr rasch nach dem Einschalten anstehen. Dies ist insbesondere bei der Verwendung für die Versorgung der Zündvorrichtung für die schnelle Bereitstellung einer ausreichend hohen Zündversorgungsspannung, als auch für eine geregelte Betriebsspannung einer Gasentladungslampe, insbesondere einer Hochdruck-Gasentladungslampe von entscheidender Wichtigkeit.

## Patentansprüche

1. Getaktete Stromversorgungsschaltung mit einer von einem Verbraucher unabhängigen, zumindest zeitweise wirksamen Last, insbesondere für die Energieversorgung von Gasentladungslampen als Verbraucher, mit einem einen Übertrager (11) enthaltenden Gleichspannungs-Gleichspannungs-Wandler (10, 210), Schaltmittel (12) zur Verbindung des Wandlers (10, 210) mit einer Gleichspannungsquelle (13) und einer Steueranordnung (14, 214), die in Abhängigkeit von einem ausgangseitig vorhandenen Lastzustand Schaltignale (15) für die Schaltmittel (12) bereitstellt,
dadurch gekennzeichnet, daß
der Übertrager (11) des Gleichspannungs-Gleichspannungs-Wandlers (10, 210) so aufgebaut ist, daß zwei Spannungen (U+, U-) unterschiedlicher Polarität und Größe ausgangsseitig abnehmbar sind,
zumindest eine (U-) dieser Spannungen geregelt und für die Versorgung während des Betriebs des Verbrauchers vorgesehen ist, und
die zumindest zeitweise wirksame Last (28) an die geregelte Spannung (U-) schaltbar ist.

2. Getaktete Stromversorgungsschaltung nach Anspruch 1, dadurch gekennzeichnet, daß die zweite Spannung (U-) ebenfalls geregelt wird, daß diese dazu mit einer Belastung beaufschlagt wird, an welcher der aktuelle Wert der zweiten Spannung (U-) feststellbar ist, daß dieser festgestellte Wert auf eine Regelungsschaltung (208) geführt ist, welche in Abhängigkeit vom festgestellten Wert der zweiten Spannung (U-) die zeitweise wirksame Last (28) zu- oder abschaltet.

3. Getaktete Stromversorgungsschaltung nach Anspruch 2, dadurch gekennzeichnet, daß die Belastung durch einen Spannungsteiler (205, 206) gebildet ist, dessen Teileranschluß (207) auf die Regelungsschaltung (208) geführt ist.

4. Getaktete Stromversorgungsschaltung nach Anspruch 3, dadurch gekennzeichnet, daß parallel zum Spannungsteiler (205, 206) die Reihenschaltung eines Widerstandes (351) mit einem Transistor (352) angeordnet ist, der von der Regelschaltung (208) dann leitend geschaltet wird, wenn der am Spannungsteiler (205, 206) abgegriffene aktuelle Wert der zweiten Spannung (U+) über dem Sollwert liegt.

5. Getaktete Stromversorgungsschaltung nach Anspruch 3 oder 4, dadurch gekennzeichnet, daß der Spannungsteiler (205, 206) derart bemessen ist, daß das Puls-zu-Pausen-Verhältnis der Abschaltung der zeitweise wirksamen Last (28) nicht zu klein bleibt, daß es insbesondere eine Regelung in beide Richtungen erlaubt.

6. Getaktete Stromversorgungsschaltung nach einem der vorigen Ansprüche, dadurch gekennzeichnet, daß die zeitweise wirksame Last (28) mit veränderlichem Widerstand zu- oder abschalbar ist.

7. Getaktete Stromversorgungsschaltung nach Anspruch 6, dadurch gekennzeichnet, daß die zeitweise wirksame Last aus der Reihenschaltung eines ohmschen Widerstandes (28) und eines Transistors (429) besteht, welcher nach Art der Zweipunktregelung aus- und einschaltbar ist, oder welcher mit einem Puls-Weiten-Modulations-Signal entsprechend der Pulsweite mehr oder weniger lang einschaltbar ist.

8. Getaktete Stromversorgungsschaltung nach Anspruch 6, dadurch gekennzeichnet, daß die zeitweise wirksame Last (28) aus einem variablen Lastwiderstand besteht, insbesondere dem Drain-Source-Widerstand eines FET-Transistors, wobei der Wert des Widerstandes von dem Betrag der Gate-Source-Spannung abhängig ist.

9. Getaktete Stromversorgungsschaltung nach einem der vorigen Ansprüche, dadurch gekennzeichnet, daß für die Regelung der geregelten Spannung bzw. Spannungen (U- bzw. U+, U-) ein Mikrokontroller (208) vorgesehen ist, welcher auf die Schaltmittel (12) des Gleichspanungs-Gleichspannungs-Wandlers (10, 210) einwirkt.

10. Getaktete Stromversorgungsschaltung nach einem der vorigen Ansprüche, dadurch gekennzeichnet, daß nach vollständigem Einschalten und Inbetriebgehen des Verbrauchers die eine der beiden Spannungen, vorzugsweise die ungeregelte oder die mit dem höheren Betragswert (U+), mittels eines Schalters (270) abschaltbar ist.

11. Getaktete Stromversorgungsschaltung nach einem der vorigen Ansprüche, gekennzeichnet durch die Verwendung in einem Steuergerät zur Energieversorgung von Hochdruck-Gasentladungslampen, wobei diese insbesondere in Scheinwerfern von Kraftfahrzeugen angeordnet sind.

## Claims

1. Pulsed power supply circuit having a load which is independent from a consumer and acts at least at times, in particular for supplying power to gas-discharge lamps as the consumer, having a DC/DC voltage converter (10, 210) which contains a transformer (11), switching means (12) for connecting the converter (10, 210) to a DC voltage source (13), and a control arrangement (14, 214) which provides switching signals (15) for the switching means (12) as a function of a load state which is present on the output side,
characterized in that
the transformer (11) of the DC/DC voltage converter (10, 210) is designed such that two voltages (U+, U-) of different polarity and magnitude can be tapped off on the output side,
at least one (U-) of these voltages is regulated and is intended for supply during operation of the consumer, and
the load (28) which acts at least at times can be connected to the regulated voltage (U-).

2. Pulsed power supply circuit according to Claim 1, characterized in that the second voltage (U-) is likewise regulated, in that, for this purpose, this voltage has connected to it a burden on which the instantaneous value of the second voltage (U-) can be detected, in that this detected value is passed to a regulating circuit (208) which connects or disconnects the load (28) which acts at times, as a function of the detected value of the second voltage (U-).

3. Pulsed power supply circuit according to Claim 2, characterized in that the burden is formed by a voltage divider (205, 206) whose divider connection (207) is connected to the regulating circuit (208).

4. Pulsed power supply circuit according to Claim 3, characterized in that a series circuit formed by a resistor (351) and a transistor (352) is arranged in parallel with the voltage divider (205, 206), which transistor (352) is switched on by the regulating circuit (208) when the instantaneous value of the second voltage (U+) tapped off on the voltage divider (205, 206) is greater than the nominal value.

5. Pulsed power supply circuit according to Claim 3 or 4, characterized in that the voltage divider (205, 206) is dimensioned in such a manner that the duty ratio of disconnection of the load (28) which acts at times does not remain too low to allow, in particular, regulation in both directions.

6. Pulsed power supply circuit according to one of the preceding claims, characterized in that the load (28) which acts at times can be connected or disconnected with a variable resistance.

7. Pulsed power supply circuit according to Claim 6, characterized in that the load which acts at times comprises a series circuit formed by a non-reactive resistor (28) and a transistor (429) which can be switched on and off in the same way as two-point regulation, or which can be switched on for a greater or lesser period in accordance with the pulse width of a pulse-width modulation signal.

8. Pulsed power supply circuit according to Claim 6, characterized in that the load (28) which acts at times comprises a variable load resistance, in particular the drain-source resistance of an FET transistor, in which case the value of the resistance is dependent on the magnitude of the gate-source voltage.

9. Pulsed power supply circuit according to one of the preceding claims, characterized in that a microcontroller (208) is provided for regulation of the regulated voltage or voltages (U- or U+, U-) and acts on the switching means (12) of the DC/DC voltage converter (10, 210).

10. Pulsed power supply circuit according to one of the preceding claims, characterized in that once the consumer has been completely switched on and is in operation, one of the two voltages, preferably the unregulated voltage or the voltage having the higher magnitude (U+), can be disconnected by means of a switch (270).

11. Pulsed power supply circuit according to one of the preceding claims, characterized by use in a controller for supplying power to high-pressure gas discharge lamps, in which case said lamps are arranged in particular in motor vehicle headlights.

## Revendications

1. Circuit d'alimentation en courant, cadencé, comprenant une charge indépendante du consommateur et qui est active au moins périodiquement, notamment pour l'alimentation en énergie de consommateurs constitués par des lampes à décharge de gaz, un transmetteur (11) avec un transformateur de tension continu/continu (10, 210), un moyen de commutation (12) pour relier le transformateur (10, 210) à une source de tension continue (13) et un dispositif de commande (14, 214) qui en fonction d'un état de charge existant en sortie, fournit des signaux de commutation (15) pour le moyen de commutation (12),
caractérisé en ce que
le convertisseur (11) du transformateur de tension continu/continu (10, 210) est réalisé pour fournir deux tensions (U+, U-) de polarités et d'amplitudes différentes en sortie,
au moins l'une (U-) de ces tensions étant régulée et servant à l'alimentation pendant le fonctionnement du consommateur et,
la charge active au moins périodiquement (28) peut être branchée sur la tension régulée (U-).

2. Circuit d'alimentation en courant, cadencé, selon la revendication 1,
caractérisé en ce que
la seconde tension (U-) est également régulée,
celle-ci est mise à une charge permettant de déterminer la valeur actuelle de la seconde tension (U-), et cette valeur est appliquée à un circuit de régulation (208) qui, en fonction de la valeur constatée de la seconde tension (U-) branche ou coupe la charge active périodiquement (28).

3. Circuit d'alimentation en courant, cadencé selon la revendication 2,
caractérisé en ce que
la charge est constituée par un diviseur de tension (205, 206) dont la prise de diviseur (207) est reliée au circuit de régulation (208).

4. Circuit d'alimentation en courant, cadencé selon la revendication 3,
caractérisé en ce qu'
en parallèle au diviseur de tension (205, 206), on a le montage en série d'une résistance (351) et d'un transistor (352) débloqués par le circuit de régulation (208) lorsque la valeur actuelle de la seconde tension (U+) prise sur le diviseur de tension (205, 206) dépasse la valeur seuil.

5. Circuit d'alimentation en courant, cadencé, selon les revendications 3 ou 4,
caractérisé en ce que
le diviseur de tension (205, 206) est dimensionné pour que le rapport de travail (impulsion/pause) de coupure de la charge active périodiquement (28) ne reste pas trop faible pour permettre notamment une régulation dans les deux directions.

6. Circuit d'alimentation en courant, cadencé, selon l'une quelconque des revendications précédentes,
caractérisé en ce que
la charge (28) active périodiquement peut être coupée ou branchée avec une résistance variable.

7. Circuit d'alimentation en courant, cadencé selon la revendication 6,
caractérisé en ce que
la charge active périodiquement est formée du montage en série d'une résistance ohmique (28) et d'un transistor (429) qui peut être coupé et branché à la manière d'une régulation en deux points ou qui est branché plus ou moins longtemps par un signal à modulation de largeur d'impulsion correspondant à la largeur d'impulsion.

8. Circuit d'alimentation en courant, cadencé selon la revendication 6,
caractérisé en ce que
la charge active périodiquement (28) se compose d'une résistance de charge variable notamment de la résistance drain-source d'un transistor à effet de champ FET, la valeur de la résistance dépendant de l'amplitude de la tension grille-source.

9. Circuit d'alimentation en courant, cadencé selon l'une quelconque des revendications précédentes,
caractérisé en ce que
pour la régulation de ou des tensions régulées (U- ou U+, U-), il est prévu un microcontrôleur (208) qui agit sur le moyen de commutation (12) du transformateur de tension continu/continu (10, 210).

10. Circuit d'alimentation en courant, cadencé selon l'une quelconque des revendications précédentes,
caractérisé en ce qu'
après le branchement complet et la mise en route du consommateur, celle des deux tensions de préférence la tension non régulée ou celle qui a l'amplitude la plus élevée (U+), peut être coupée par un interrupteur (270).

11. Circuit d'alimentation en courant, cadencé selon l'une quelconque précédentes,
caractérisé
à l'utilisation dans l'appareil de commande pour l'alimentation en énergie de lampes à décharge de gaz à haute pression, ces lampes équipant notamment des projecteurs de véhicules automobiles.
